# EUROPEAN PATENT APPLICATION

(11) **EP 4 137 689 A1**
(43) Date of publication of application: **22.02.2023**
(21) Application number: 22191179.5
(22) Date of filing: 19.08.2022
(51) Int. Cl.: F02C 7/22, F02C 7/224

(54) **AIR MANIFOLDS FOR FUEL INJECTORS WITH FUEL AIR HEAT EXCHANGERS**

(30) Priority: 19.08.2021 US 202117406690
(71) Applicant: Collins Engine Nozzles, Inc., West Des Moines, IA 50265 (US)
(72) Inventor: RYON, Jason, Carlisle, IA (US); ZINK, Gregory A., Des Moines, IA (US); WILLIAMS, Brandon Phillip, Johnston, IA (US); PROCIW, Lev A., Johnston, IA (US)
(74) Representative: Dehns

(57) **Abstract**

A system includes an air manifold (102), a fuel manifold (104) and plurality of fuel injectors (106). Each fuel injector includes a fixture portion (108), a nozzle outlet (110), and a heat exchanger portion (112) connecting between the fixture portion and the nozzle outlet. An air channel (114) and a fuel channel (116) are in thermal communication with one another for heat exchange between fuel and air passing through the heat exchanger portion. The respective inlet of the fuel channel of each of the fuel injectors in the plurality of fuel injectors is connected to the fuel manifold for fluid communication of fuel from the fuel manifold to the nozzle outlets for combustion. The respective outlet of the air channel of each of the fuel injectors in the plurality of fuel injectors is connected to the air manifold for fluid communication of air from the heat exchanger portions into the air manifold.

## Description

### BACKGROUND

### 1. Field

The present disclosure relates generally to fuel and air systems for gas turbine engines, and more particularly to fuel injectors and fuel air heat exchangers for gas turbine engines.

### 2. Description of Related Art

A portion of the compressor discharge air in a gas turbine engine can be diverted from the main gas flow though the engine for various uses in the engine and onboard an aircraft. However, this air is typically too hot to be of use in general applications. Fuel air heat exchangers can be used to cool the diverted portion of compressed air. However, fuel air heat exchangers are not typically easy to retrofit on existing engine designs and this among other things leaves a need in the art for improved systems and methods for fuel air heat exchange. This disclosure provides a solution for this need.

### SUMMARY

A system includes an air manifold, a fuel manifold and plurality of fuel injectors. Each fuel injector includes a fixture portion, a nozzle outlet, and a heat exchanger portion connecting between the fixture portion and the nozzle outlet. An air channel and a fuel channel are in thermal communication with one another for heat exchange between fuel and air passing through the heat exchanger portion. The fuel channel passes from a fuel channel inlet, through the fixture portion and the heat exchanger portion to the nozzle outlet. The air channel passes from the heat exchanger portion and out through the fixture portion to an air channel outlet. The respective inlet of the fuel channel of each of the fuel injectors in the plurality of fuel injectors is connected to the fuel manifold for fluid communication of fuel from the fuel manifold to the nozzle outlets for combustion. The respective outlet of the air channel of each of the fuel injectors in the plurality of fuel injectors is connected to the air manifold for fluid communication of air from the heat exchanger portions into the air manifold.

The air manifold can include an air plenum within an air plenum wall. The respective outlet of the air channel of each of the fuel injectors in the plurality of fuel injectors can be connected in fluid communication with the air plenum through the air plenum wall for collection of cooled, compressed air from the heat exchanger portions into the plenum. The fuel manifold can include a fuel plenum within a fuel plenum wall. Each respective inlet of the fuel channel of each of the fuel injectors of the plurality of fuel injectors can be connected in fluid communication with the fuel plenum through the fuel plenum wall for distribution of fuel from the fuel plenum to the nozzle outlets of the plurality of fuel injectors.

The fuel plenum wall can be spaced apart from the air plenum wall. The air plenum wall can define a first circumferential ring radially outward from the plurality of fuel injectors. The fuel plenum wall can define a second circumferential ring radially outward from the plurality of fuel injectors. The fuel plenum wall can be spaced apart from the from the air plenum wall in at least one of a radial and axial direction. At least one of the first and second circumferential rings can include a flexible, polymer hose material. At least one of the first and second circumferential rings can include a rigid, metallic material. The fuel manifold can include a threaded inlet configured to connect to an engine fuel supply. The air manifold can include a threaded outlet configured to connect to a compressed air system.

Each fuel injector in the plurality of fuel injectors can include a mounting flange configured to be mounted to an engine case. The fixture portion can extend in an outward direction from the mounting flange. Each fuel injector in the plurality of fuel injectors can include a feed arm extending radially inward from the mounting flange, and a fuel nozzle extending from the feed arm to the nozzle outlet and operable to issue fuel into a combustor. The fuel channel and the air channel can be in fluid isolation from one another to maintain separation of fuel and air in the heat exchanger portion. The fuel channel and the air channel can be in thermal communication with one another as a heat exchanger to cool air in the air channel and heat fuel in the fuel channel. The heat exchanger can be a counter flow heat exchanger. An inlet of the air channel can be in the fuel injector between the nozzle outlet and the mounting flange. The inlet of the air channel can be in the feed arm between the fuel nozzle and the mounting flange.

The mounting flange can be mounted to an engine case. The feed arm can extend inward from the mounting flange into the engine case. Each of the air manifold and fuel manifold can be outside the engine case. There need be no o-rings sealing directly between the engine case and the air channel in the heat exchanger section of each of the fuel injectors of the plurality of fuel injectors. There need be no o-rings sealing directly between the engine case and the fuel channel in the heat exchanger section of each of the fuel injectors of the plurality of fuel injectors. A combustor dome wall can be inside the engine case. The nozzle outlet can be mounted proximate to and in fluid communication through the combustor dome wall to issue fuel into a space on a combustor side of the combustor dome wall. The inlet of the air channel can be in a position to receive compressor discharge air from a compressor side of the combustor dome wall opposite the space on the combustor side of the combustor dome wall.

These and other features of the systems and methods of the subject disclosure will become more readily apparent to those skilled in the art from the following detailed description of the preferred embodiments taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, preferred embodiments thereof will be described in detail herein below with reference to certain figures, wherein:
Fig. 1 is a schematic cross-sectional view of an embodiment of a system constructed in accordance with the present disclosure, showing fuel and air manifolds for a set of fuel injectors with an integrated fuel air heat exchangers extending into the engine case; and
Fig. 2 is a schematic perspective view of the fuel and air manifolds of Fig. 1, showing the manifold rings and their connections to the fuel injectors.

### DETAILED DESCRIPTION OF THE PREFERRED EMBODIMENTS

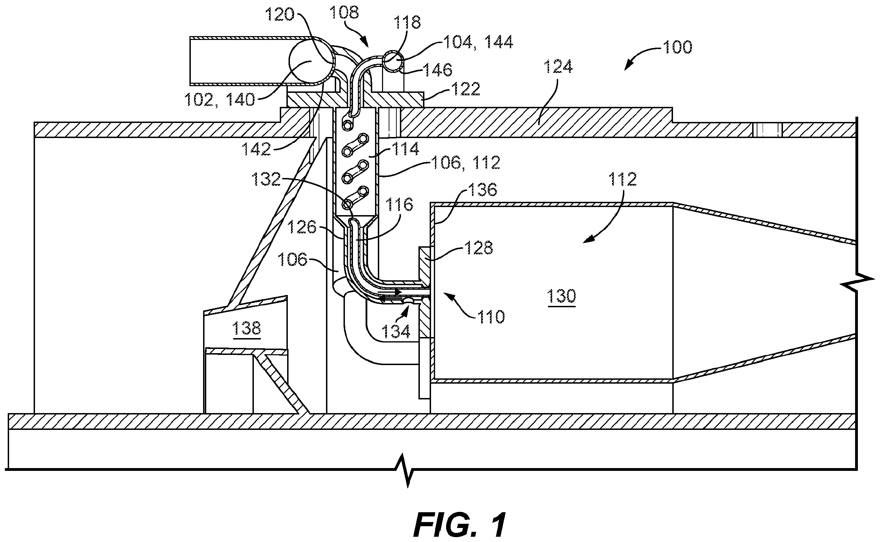

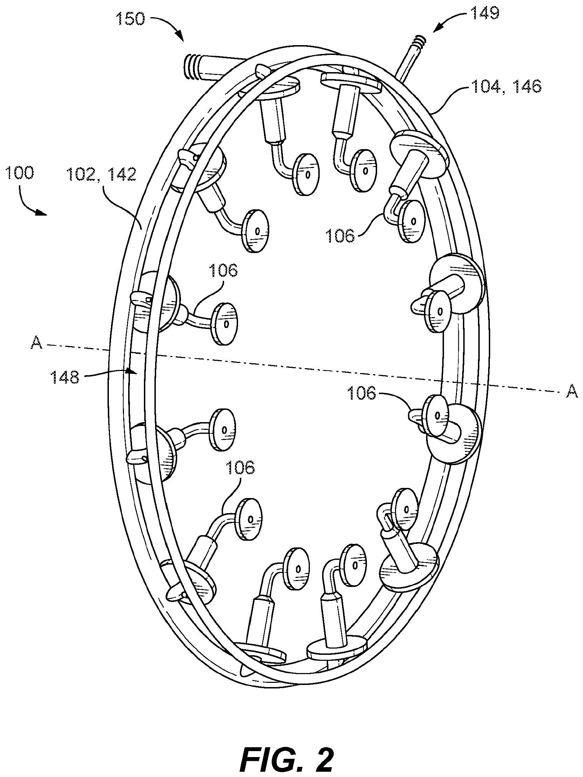

Reference will now be made to the drawings wherein like reference numerals identify similar structural features or aspects of the subject disclosure. For purposes of explanation and illustration, and not limitation, a partial view of an embodiment of a fuel injector in accordance with the disclosure is shown in Fig. 1 and is designated generally by reference character 100. Other embodiments of systems in accordance with the disclosure, or aspects thereof, are provided in Fig. 2, as will be described. The systems and methods described herein can be used to provide manifolding for fuel nozzles with integrated fuel air heat exchangers readily retrofittable into existing engines as well as new engines.

A system 100 includes an air manifold 102, a fuel manifold 104 and plurality of fuel injectors 106 (only two of which are visible in Fig. 1, but the rest are shown in Fig. 2). Each fuel injector 106 includes a fixture portion 108, a nozzle outlet 110, and a heat exchanger portion 112 connecting between the fixture portion 108 and the nozzle outlet 110. An air channel 114 and a fuel channel 116 are in thermal communication with one another for heat exchange between fuel and air passing through the heat exchanger portion 112.

The fuel channel 116 passes from a fuel channel inlet 118, through the fixture portion 108 and the heat exchanger portion 112 to the nozzle outlet 110. The air channel 114 passes from the heat exchanger portion 112 and out through the fixture portion 108 to an air channel outlet 120.

Each fuel injector 106 includes a mounting flange 122 mounted to the engine case 124. The fixture portion 108 extends in an outward direction from the mounting flange 122. Each fuel injector 106 includes a feed arm 126 extending radially inward from the mounting flange 122, and a fuel nozzle 128 extending from the feed arm 126 to the nozzle outlet 110 and operable to issue fuel into the combustor 130. The fuel channel 116 and the air channel 114 are in fluid isolation from one another, e.g. separated by the tube wall 132, to maintain separation of fuel and air in the heat exchanger portion 112. The fuel channel and the air channel are in thermal communication, e.g. by thermal conduction through the tube wall 132, with one another as a heat exchanger to cool air in the air channel 114 and to heat fuel in the fuel channel 116. The heat exchanger is a counter flow heat exchanger, as indicated by the counter flowing arrows in Fig. 1. An inlet 134 of the air channel 114 is in the fuel injector 106 between the nozzle outlet 110 and the mounting flange 122, specifically, between the fuel nozzle 128 and the mounting flange 122, however any suitable inlet location can be used such as locations on or inside the fuel nozzle 128 itself.

The respective inlet 118 of the fuel channel 116 of each of the fuel injectors 106 is connected to the fuel manifold 104 for fluid communication of fuel from the fuel manifold 104 to the nozzle outlets 110 for combustion. The respective outlet 120 of the air channel of each of the fuel injectors 106 is connected to the air manifold 102 for fluid communication of air from the heat exchanger portions 112 of the fuel injectors 106 into the air manifold 102.

The feed arm 126 of each of the fuel injectors 106 extends inward from the respective mounting flange 122 into the engine case 124. Each of the air manifold 102 and fuel manifold 104 is outside the engine case 124. Due to the arrangement the air and fuel channels 114, 116 passing through the fixture portion 108, there need be no o-rings sealing for air directly between the engine case 124 and either of the air channel 114 or fuel channel 116 in the heat exchanger section 112 of each of the fuel injectors 106, but o-rings can be used for sealing fuel in the fuel channel 116 as needed.

A combustor dome wall 136 is inside the engine case 124. The nozzle outlet 110 is mounted proximate to and in fluid communication through the combustor dome wall 136 to issue fuel into an inner space of the combustor 130 on a combustor side of the combustor dome wall 136. The inlet 134 of the air channel 114 is in a position to receive compressor discharge air (the diffuser 138 of the compressor is shown in Fig. 1) from a compressor side of the combustor dome 136.

The air manifold 102 includes an air plenum 140 within an air plenum wall 142. The respective outlet 120 of the air channel 114 of each of the fuel injectors 106 is connected in fluid communication with the air plenum 140 through the air plenum wall 142 for collection of cooled, compressed air from the heat exchanger portions 112 into the plenum 142. The fuel manifold 104 includes a fuel plenum 144 within a fuel plenum wall 146. Each respective inlet 118 of the fuel channel 116 of each of the fuel injectors 106 is connected in fluid communication with the fuel plenum 144 through the fuel plenum wall 146 for distribution of fuel from the fuel plenum 144 to the nozzle outlets 110 of the plurality of fuel injectors 106.

With reference now to Fig. 2, the fuel plenum wall 146 is spaced apart from the air plenum wall 142, with a gap 148 between the two. The gap 148 is created by axial spacing of the two plenum walls 142, 146, however the spacing can also be radial depending on the form factor of a given engine. The air plenum wall 142 defines a first circumferential ring radially outward from the plurality of fuel injectors 106 relative to the axis A, which is the central axis of the engine case 124 of Fig. 1. The fuel plenum wall 146 defines a second circumferential ring radially outward from the plurality of fuel injectors 106 relative to the axis of A. The first and second circumferential rings of the manifolds 102, 104 can include a flexible, polymer hose material, and/or a rigid, metallic material. The fuel manifold 104 includes a threaded inlet 149 configured to connect to an engine fuel supply. The air manifold 102 includes a threaded outlet 150 configured to connect to a compressed air system, e.g. for general purpose compressed air applications throughout an engine and/or aircraft.

The injectors 106 and manifolds 102, 104 are retrofittable, into existing engines or engine designs to provide fuel air heat exchange functionality. The heat exchangers are within the engine case 124, while the manifolds 102, 104 are external to case 124, but can fit in form factor of existing fuel manifolds. The cross-sectional areas (e.g. in the radial cross-section shown in Fig. 1) of the manifolds 102, 104 can be varied to adapt to specific engine types, e.g. to optimize between weight and pressure drop. Connections with external components (e.g. the threaded inlets/outlets 149, 150, and the connections to the injectors (e.g. at inlets/outlets 118, 120) can be made in a variety of ways such as threaded, quick connect, welded in place, clamped, or any other suitable technique. If the operational temperatures are low enough any seals needed in the system 100 can be made with o-rings. Otherwise, c-seals or any other suitable type of seals can be used as needed such as deformable types of seal, conical, face, or flare seals. Multiple air manifold channels (stages) could also be separated out from on another if desired to correspond to fuel stages.

Potential benefits include a high pressure, cooled air stream available for cooling other parts of the engine or airplane. There are strong safety factors achieved by locating the fuel air heat exchanger inside of the engine case. As the fuel is not heated until it is within the fuel injector feed arm cavity, elastomeric seals can still be used to connect the fuel manifold to the fuel injector without melting the seals. Velocities of the fuel are also at the highest in the fuel injector, which allows for more heat transfer than slow moving fuel locations. Heat exchange is also in a counter-flow direction (inlet of fuel and inlet of air are at opposite sides of the heat exchanger), which enhances heat transfer. In reverse operation, there can be compressed air added through the fuel injector which acts both as cooling air if needed, as well as an air assist to provide additional fuel atomization, for example at engine startup or altitude relight. Fuel can continue to heat exchange with air all the way up the feed arm. Larger or smaller air and fuel circuits can be used to tailor heat transfer rates. Temperature sensors can be integral to the fuel distributer tip and air flow rates controlled with a valve to prevent overheating the fuel temperatures.

The methods and systems of the present disclosure, as described above and shown in the drawings, provide for manifolding for fuel nozzles with integrated fuel air heat exchangers readily retrofittable into existing engines as well as new engines. While the apparatus and methods of the subject disclosure have been shown and described with reference to preferred embodiments, those skilled in the art will readily appreciate that changes and/or modifications may be made thereto without departing from the scope of the invention as defined by the claims.

## Claims

1. A system comprising:
an air manifold (102);
a fuel manifold (104); and
a plurality of fuel injectors (106), each including:
a fixture portion (108), a nozzle outlet (110), and a heat exchanger portion (112) connecting between the fixture portion and the nozzle outlet, wherein an air channel (114) and a fuel channel (116) are in thermal communication with one another for heat exchange between fuel and air passing through the heat exchanger portion, wherein the fuel channel passes from a fuel channel inlet (118), through the fixture portion and the heat exchanger portion to the nozzle outlet, and wherein the air channel passes from the heat exchanger portion, through the fixture portion, to an air channel outlet (120),
wherein the respective inlet of the fuel channel of each of the fuel injectors in the plurality of fuel injectors is connected to the fuel manifold for fluid communication of fuel from the fuel manifold to the nozzle outlets for combustion, and
wherein the respective outlet of the air channel of each of the fuel injectors in the plurality of fuel injectors is connected to the air manifold for fluid communication of air from the heat exchanger portions into the air manifold.

2. The system as recited in claim 1, wherein the air manifold includes an air plenum (140) within an air plenum wall (142), wherein the respective outlet of the air channel of each of the fuel injectors in the plurality of fuel injectors is in fluid communication with the air plenum through the air plenum wall for collection of air from the outlet of an air channel of at least one of the fuel injectors in the plurality of fuel injectors.

3. The system as recited in claim 2, wherein the fuel manifold includes a fuel plenum (144) within a fuel plenum wall (146), wherein each respective inlet of the fuel channel of each of the fuel injectors of the plurality of fuel injectors is in fluid communication with the fuel plenum through the fuel plenum wall for distribution of fuel from the fuel plenum to the nozzle outlets of the plurality of fuel injectors.

4. The system as recited in claim 3, wherein the fuel plenum wall is spaced apart from the air plenum wall.

5. The system as recited in claim 4, wherein the air plenum wall defines a first circumferential ring radially outward from the plurality of fuel injectors, wherein the fuel plenum wall defines a second circumferential ring radially outward from the plurality of fuel injectors.

6. The system as recited in claim 5, and wherein the fuel plenum wall is spaced apart from the air plenum wall in at least one of a radial and axial direction.

7. The system as recited in claim 5, wherein at least one of the first and second circumferential rings includes a flexible, polymer hose material, or wherein at least one of the first and second circumferential rings includes a rigid, metallic material.

8. The system as recited in any preceding claim, wherein the fuel manifold includes a threaded inlet (149) configured to connect to an engine fuel supply.

9. The system as recited in any preceding claim, wherein the air manifold includes a threaded outlet (150) configured to connect to a compressed air system.

10. The system as recited in any preceding claim, wherein each fuel injector in the plurality of fuel injectors includes a mounting flange (122) configured to be mounted to an engine case (124), wherein the fixture portion extends in an outward direction from the mounting flange.

11. The system as recited in claim 10, wherein each fuel injector in the plurality of fuel injectors includes:
a feed arm (126) extending radially inward from the mounting flange; and
a fuel nozzle (128) extending from the feed arm to the nozzle outlet and operable to issue fuel into a combustor.

12. The system as recited in claim 11, wherein the fuel channel and the air channel are in fluid isolation from one another to maintain separation of fuel and air in the heat exchanger portion, and wherein the fuel channel and the air channel are in thermal communication with one another as a heat exchanger to cool air in the air channel and heat fuel in the fuel channel., and optionally wherein the heat exchanger is a counter flow heat exchanger.

13. The system as recited in claim 11 or 12, wherein an inlet of the air channel is in the fuel injector between the nozzle outlet and the mounting flange., and optionally wherein an inlet of the air channel is in the feed arm between the fuel nozzle and the mounting flange.

14. The system as recited in claim 11, 12 or 13, wherein the mounting flange is mounted to an engine case (124), the feed arm (126) extends inward from the mounting flange into the engine case, and wherein each of the air manifold and fuel manifold is outside the engine case., and optionally: wherein there are no o-rings sealing directly between the engine case and the air channel in the heat exchanger section of each of the fuel injectors of the plurality of fuel injectors, or wherein there are no o-rings sealing directly between the engine case and the fuel channel in the heat exchanger section of each of the fuel injectors of the plurality of fuel injectors.

15. The system as recited in any of claims 11 to 14, further comprising a combustor dome wall (136) inside the engine case, wherein the nozzle outlet is mounted proximate to and in fluid communication through the combustor dome wall to issue fuel into a space on a combustor side of the combustor dome wall, wherein the inlet of the air channel is in a position to receive compressor discharge air from a compressor side of the combustor dome wall opposite the space on the combustor side of the combustor dome wall.
